# EUROPEAN PATENT APPLICATION

(11) **EP 3 358 512 A1**
(43) Date of publication of application: **08.08.2018**
(21) Application number: 17154516.3
(22) Date of filing: 03.02.2017
(51) Int. Cl.: G06Q 10/08

(54) **METHOD FOR DISTRIBUTING HEAT-SENSITIVE PRODUCTS**

(71) Applicant: Air Liquide Deutschland GmbH, 40235 Düsseldorf (DE); L'Air Liquide Société Anonyme pour l'Etude et l'Exploitation des Procédés Georges Claude, 75007 Paris (FR)
(72) Inventor: Lürken, Franz, 47906 Kempen (DE); Brouns, Marcel, 47906 Kempen (DE)
(74) Representative: KNH Patentanwälte Neumann Heine Taruttis PartG mbB

(57) **Abstract**

Method for distributing heat-sensitive products to at least one final customer (3) comprising at least the following steps:
a) at a distribution center (2) providing a coolant in a liquid state,
b) allocating each of the heat-sensitive products to a respective cooling box (5) for transporting the heat-sensitive products to the at least one final customer (3),
c) determining a required cooling energy for each of the cooling boxes (5),
d) at the distribution center (2) transforming the liquid coolant into a snow and, for each of the cooling boxes (5), filling the snow into at least one respective cooling container (6), wherein for each cooling box (5) an amount of the snow that is filled into the respective cooling container (6) is chosen according to the determination in step c).

According to the described method, in particular heat-sensitive food products can be distributed to final customers in cooling boxes that are cooled by a snow of a coolant such as carbon dioxide. Thereby, the required amount of carbon dioxide is determined accurately so that carbon dioxide and energy can be saved.

## Description

The present invention is directed to a method for distributing heat-sensitive products, in particular to at least one final customer.

Heat-sensitive products such as perishable food products require cooling during storage and transport. Various methods are known to provide such a cooling. For example, heat-sensitive products can be transported within cooling boxes comprising a means for cooling. Known approaches often comprise the use of a coolant such as carbon dioxide or nitrogen. In particular, solid carbon dioxide can be used.

In common approaches, the required amount of the coolant cannot be determined precisely. Further, the cooling power of the coolant cannot be controlled sufficiently. In order to ensure that the cooling power does not fall below a minimally required value, often an unnecessary large amount of the coolant is used. That is, in prior art energy and coolant are often used inefficiently.

Also, in many approaches an accurately determined amount of the coolant cannot be dispensed. For example, in many common methods solid carbon dioxide can only be dispensed with an accuracy of several hundred grams. To ensure a specific cooling capacity, thus, frequently an amount of coolant is dispensed being significantly higher than the amount that would be necessary.

It is, therefore, an object of the present invention to overcome at least in part the disadvantages known from prior art and in particular to provide a method for distributing heat-sensitive products, in particular to final customers in an energy and/or coolant saving way.

These objects are solved by the features of the independent claims. Dependent claims are directed to preferred embodiments of the present invention.

A method is provided for distributing heat-sensitive products to at least one final customer comprising at least the following steps:
a) at a distribution center providing a coolant in a liquid state,
b) allocating each of the heat-sensitive products to a respective cooling box for transporting the heat-sensitive products to the at least one final customer,
c) determining a required cooling energy for each of the cooling boxes,
d) at the distribution center transforming the liquid coolant into a snow and, for each of the cooling boxes, filling the snow into at least one respective cooling container, wherein for each cooling box an amount of the snow that is filled into the respective cooling container is chosen according to the determination in step c).

Preferably, the heat-sensitive products comprise at least food products. A product is heat-sensitive, if its quality can be deteriorated by heat intake, so that it requires cooling. For example, the heat-sensitive products can comprise frozen food products such as frozen meat, frozen vegetables or frozen fish. Also, the heat-sensitive products can comprise fresh food products such as milk, yoghurt or meat. Different heat-sensitive products can have different temperature requirements, that is, different temperature ranges, within which the temperature of the respective heat-sensitive products is to be maintained at all times.

With the present method, various heat-sensitive products can be distributed to final customers. For example, the final customers can order products from a grocery store for home delivery. The heat-sensitive products among the ordered products can be transported within cooling boxes. Thereby, it is preferred that one cooling box is assigned to each final customer. If the heat-sensitive products ordered by one final customer have different temperature requirements, multiple cooling boxes can be assigned to this final customer. Also, the products of several of the final customers can be transported in a shared cooling box.

In step b), the heat-sensitive products that are to be delivered to the final customers are preferably distributed among the cooling boxes. Thereby, each of the heat-sensitive products is allocated to a respective cooling box.

Preferably, the products that are to be delivered to the final customers are stored and commissioned at the distribution center. From the distribution center, the products are distributed to the final customers, preferably by means of a transport vehicle. The heat-sensitive products are preferably transported within the cooling boxes. Thereby, the cooling boxes preferably do not require external cooling at least for the duration of the transport in the transport vehicle. In order to provide cooling for the cooling boxes, the coolant can be used.

Therefore, in step a), the coolant is provided at the distribution center. Therein, the term to provide comprises at least obtaining the coolant from a tank of the distribution center and obtaining the coolant from a tank of a tank vehicle.

The coolant preferably comprises carbon dioxide. Preferably, the coolant is manufactured at a coolant manufacturer site and subsequently delivered to the distribution center. The coolant manufacturer site can be, for example, a factory for the production of cryogenic gases. It can be expected that the coolant manufacturer site and the distribution center are not located in the same place so that the coolant has to be transported form the coolant manufacturer site to the distribution center. The coolant can be transported particularly efficiently if the coolant is in its liquid state.

In its liquid state the coolant can also be stored with a significantly lower loss compared to a solid state. That is, storing the coolant in its liquid state can be more energy efficient than storing the liquid in its solid state. The liquid coolant can be stored, for example, in a tank at the distribution center.

In order to save energy and coolant, the cooling energy required for the respective cooling boxes is determined in step c). A cooling box that is filled with only a few fresh food products requires less cooling energy than a cooling box that is filled with a large amount of a frozen product. Preferably, only the actually required amount of the coolant is used for cooling the respective cooling box. When determining the cooling energy required for the respective cooling box beside the temperature requirements of the heat-sensitive products and/or the amount (mass= of heat-sensitive products. Additionally or instead the ambient temperature and/or the thermal insulation of the cooling box can be considered for determining the required cooling energy.

In step d) a cooling container filled with coolant snow is provided for each of the cooling boxes. The cooling power of the coolant depends in particular on the surface area of the coolant. As a snow has a larger surface area than a block of solid coolant, snow is particularly preferred for cooling the cooling boxes.

Preferably the cooling container is a cooling bag that can be filled with coolant snow and that can be placed into a cooling box. The cooling bag is preferably made at least partly with a plastic foil. Alternatively, it is preferred that the cooling container is a cooling space within the cooling box. For example, the cooling space can be a compartment of the cooling box that is accessible from the outside of the cooling box in such a way that coolant snow can be introduced into the cooling space from the outside of the cooling box.

It has to be noted that the cooling energy is not the same as the cooling power. The cooling power is a measure for how effective and/or powerful the cooling is. With a high cooling power, a large temperature drop can be achieved in a short time. The cooling energy is the cooling power accumulated over time. That is, a high cooling power applied over a short period of time can correspond to the same cooling energy than a lower cooling power applied over a respectively longer time. The cooling power depends in particular on the coolant surface. The cooling energy depends in particular on the total amount of the coolant.

With the described method, the use of coolant snow can be particularly efficient. If the snow was already obtained at the coolant manufacturer site, the snow had to be transported to the distribution center. Due to the low density of the snow, such a transport would be very expensive and hence inefficient. In contrast, with the described method, the coolant can be transported in its liquid state form the coolant manufacturer site to the distribution center. At the distribution center, the snow can be obtained by a snow machine, preferably in the case of carbon dioxide as a coolant by expanding liquid carbon dioxide from a significantly high pressure (for example from more than 5,18 bar) at significantly low temperatures of the carbon dioxide (for example at 216.55 K [Kelvin]). Preferably, the significantly high pressure is in the range of 8 bar to 25 bar, in particular in the range of 12 bar and 16 bar. The corresponding temperature is in the range of 238 K and 246 K [Kelvin].

Preferably, the snow that is obtained by the snow machine is filled into the cooling containers immediately. Further, it is preferred that the snow is obtained immediately before the cooling by the cooling container is required.

In a preferred embodiment of the method in step c) the required cooling energy is determined at least depending on an estimated duration over which a temperature within the respective cooling box is to be maintained within a certain predetermined temperature range.

Preferably, the interior temperature of the cooling boxes is within the temperature range required for the respective heat-sensitive products when the heat-sensitive products are filled into the respective cooling boxes. When the cooling container is placed into the cooling box, the cooling box is closed and the transport begins, the temperature is
to be close to the lower boundary of the respective temperature range. Subsequently, the temperature is to be maintained within the temperature range. This can be achieved particularly by means of the cooling container. Although the cooling boxes are preferably thermally isolated, heat intake from the outside cannot be avoided completely. The cooling power of the cooling container hence is to compensate for this heat intake. The longer the cooling container is supposed to do so, the higher is the required cooling energy and, accordingly, the more coolant is required to be contained within the cooling container. Therefore, in step c) the time is estimated over which the temperature within the cooling box is supposed to be maintained within the respective temperature range. Due to the heat intake, the temperature of the cooling box is increased. With the thermal insulation of the cooling box and with the cooling container this process can be slowed down.

In a further preferred embodiment of the method in step c) the required cooling energy is determined at least depending on an initial temperature to which the cooling box is to be cooled initially.

In this embodiment it is not required that the temperature of the cooling box already is within the required temperature range when the cooling container is placed into the cooling box. In this case, the cooling box is cooled by the cooling container to a temperature within the temperature range initially. This embodiment is particularly suitable for distribution centers that do not have a large cooled space within which the heat-sensitive products and the cooling boxes are stored and within which the cooling boxes are filled with the heat-sensitive products and with the cooling container s. In contrast, this embodiment is particularly suitable for a smaller distribution center in which the heat-sensitive products are stored within a refrigerator and in which the cooling boxes are stored within a non-cooled space. In this case, the cooling container can be placed into the cooling box, thereby cooling the cooling box to the initially required temperature. The initially required temperature is preferably close to the lower bound of the respective temperature range. Subsequently, the heat-sensitive products can be taken from the refrigerator and can be placed into the cooling box. The amount of coolant required is preferably determined depending on the required initial temperature of the cooling box. Also, the temperature of the cooling box before placing the cooling container into the cooling box is preferably taken into account.

The temperature to which the cooling box is cooled by the cooling container depends in particular on the temperature of the coolant and on the cooling power. Nevertheless, the required cooling energy can also depend on the initial temperature. A low required initial temperature can require a high initial cooling power and, if the temperature is to be maintained low, also a high cooling energy.

In a further preferred embodiment of the method a temperature in at least one of the cooling boxes is supposed to be maintained in a first temperature range of -25 °C and -20 °C [degrees Celsius]. The first temperature range is particularly suitable for frozen food products.

In a further preferred embodiment of the method a temperature in at least one of the cooling boxes is to be maintained in a second temperature range of -1 °C and +4 °C. The second temperature range is particularly suitable for fish and meat products.

In a further preferred embodiment of the method a temperature in at least one of the cooling boxes is to be maintained in a third temperature range of +4 °C and +8 °C. The third temperature range is particularly suitable for fresh products such as bananas or chocolate.

In a further preferred embodiment of the method in step d) the snow is compressed to a block.

The cooling power of the cooling container depends in particular on the surface area of the coolant snow within the cooling container. The larger the surface area of the coolant, the higher is the cooling power but the shorter is the period over which the cooling container can provide cooling. Depending on the required temperature range, a certain cooling power can be required. In this embodiment, the cooling power of the cooling container can be adjusted. Compressing the snow reduces the surface area of the snow and hence decreases its cooling power. Compressing the snow in this context is to be understood in such a way that the volume of the snow is significantly reduced. However, in this context compressing the snow is not to include a reduction of the snow volume to such an extent that the compressed snow could be considered a solid coolant block. In certain cases, the snow is compressed after being filled into the cooling container. This is done to adopt the actual cooling power to the required cooling power. Further, it is preferred that the coolant is compressed into a flat shape in order to keep the surface of the coolant as large as possible. Also, such a compression can save space within the cooling box.

In a further preferred embodiment of the method in step d) a pressure exerted onto the snow to obtain the block is chosen at least depending on an estimated duration over which a temperature within the respective cooling box is to be maintained within a certain predetermined temperature range.

The cooling power can depend on how densely the snow is compressed. If an intense cooling is required for a short period of time, the snow is preferably compressed with a low pressure only or, alternatively, is not compressed at all. If only a slight cooling is required over a long period of time, the snow is preferably compressed with a higher pressure.

Also, the coolant snow can be insulated thermally in different ways, thereby affecting the cooling power. In some special cases this may include active thermal insulations like water/ice or eutectics, which can be cooled by a first strong cooling provided by the coolant, and which subsequently can provide supporting cooling power by melting.

Not only by reducing the surface area of the coolant the cooling power can be affected. An additional or alternative way is provided in a further preferred embodiment of the method, wherein in step d), for reducing the cooling power of the coolant, a means for thermal insulation is placed between the coolant within the cooling container and the remaining interior of the cooling box.

If the cooling container is a compartment within the cooling box, a thermal insulation element such as a thermal insulation plate made with thermally insulating material can be placed between the compartment and the remaining interior of the cooling box, which is the space products can be placed into.

If the cooling container is a cooling bag, the means for thermal insulation is preferably comprised within the material of the cooling bag. Also, the material of the cooling bag can be the means for thermal insulation.

In a further preferred embodiment of the method the means for thermal insulation is chosen at least depending on an estimated duration over which a temperature within the respective cooling box is to be maintained within a certain predetermined temperature range.

If the cooling container is a compartment within the cooling box, preferably a plurality of different thermal insulation plates are provided in such a way that for a respective cooling box one or more of the available insulation plates can be used in order to individually adapt the cooling power as required.

If the cooling container is a cooling bag, preferably different materials for the cooling bag are provided in such a way that for a particular cooling bag one of several possible materials can be chosen. Thereby, a respective cooling bag can be obtained that provides a thermal insulation that is adapted individually to the required cooling power. Also, a thickness of the material of the cooling bag can be varied in order to adjust the strength of the thermal insulation.

The described method is applicable to cooling boxes with various shapes and sizes. According to a preferred embodiment the method is particularly applicable if each of the cooling boxes has an internal volume in the range of 1 1 to 5000 1 [liters], preferably in the range of 10 1 to 100 1, in particular in the range of 500 1 to 1200 1. These values of internal volumes of the cooling boxes have been found to satisfy the usual needs of customers allowing to store the heat-sensitive products and the cooling container.

In a further preferred embodiment of the method in step c) the required cooling energy is determined using a control unit that has access to at least one of the following data:
- a mass of the heat-sensitive products allocated to a respective cooling box;
- a temperature requirement of the heat-sensitive products allocated to the respective cooling box;
- a current (ambient) temperature of the environment;
- a measure for the thermal insulation and/or for the thermal insulation surface area of the respective cooling box;
- a volume of the respective cooling box;
- a schedule for a delivery tour of a transport vehicle by means of which the respective cooling box is to be transported; and
- a measure for a thermal contact between the cooling box and other cooled or uncooled boxes in its proximity.

Preferably, the amount of the coolant snow filled into a cooling container is adapted to the cooling requirement of the cooling box the cooling container is assigned to. Preferably, the cooling containers are filled individually for each cooling box. Therefore, information about the cooling box, the heat-sensitive products allocated thereto, the temperature of the environment and a planned transport duration of the respective cooling box are preferably provided when filling the respective cooling container with snow.

The control unit is preferably comprised within a snow machine for transforming the liquid coolant into the snow at the distribution center. The control unit is preferably connected to a user terminal for entering at least a part of the described information. Also, the control unit can be connected to a computer network of the distribution center in a way that the respective data can be obtained from the computer network. Further, the control unit can be connected to sensors for the respective data. For example, the weight of the cooling box can be measured and provided to the control unit. Further, the temperature of the environment can be measured with a temperature sensor connected to the control unit or can be retrieved via a computer network using e. g. a regional weather forecast. Also, the cooling box can have a bar code that can be scanned and processed by the control unit. The bar code can, for example, encode the measure for the thermal insulation and/or for the thermal insulation surface area of the respective cooling box, the volume of the respective cooling box and a registration number of the respective cooling box. From the registration number of the cooling box, the mass and temperature requirement of the heat-sensitive products allocated to the respective cooling box and the schedule for the delivery tour of the transport vehicle by means of which the respective cooling box is supposed to be transported can be obtained.

It should be noted that the individual features specified in the claims may be combined with one another in any desired technological reasonable manner and form further embodiments of the invention. The specification, in particular in connection with the figure, explains the invention further and specifies particularly preferred embodiments of the invention. Particularly preferred variants of the invention and also the technical field will now be explained in more detail on the basis of the enclosed figure. It should be noted that the exemplary embodiment shown in the figure is not intended to restrict the invention. The figure is schematic and may not be to scale. The figure displays:

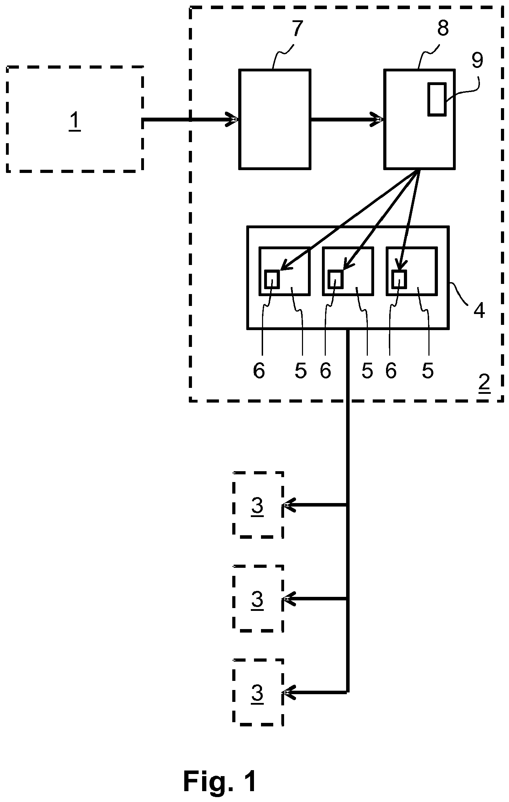

- Fig. 1:: a schematic view of a coolant manufacturer site, a distribution center and final customers.

Fig. 1 visualizes the described method. At a coolant manufacturer site 1 a coolant such as carbon dioxide can be obtained. The coolant can be transported from the coolant manufacturer site 1 to a distribution center 2, where it can be stored within a coolant storage 7. The coolant is transported and stored within the coolant storage 7 in its liquid state. In a snow machine 8 the liquid coolant from the coolant storage 7 can be transformed into a snow and filled into cooling containers 6.

At the distribution center 2, heat-sensitive products are stored. The heat-sensitive products are allocated to cooling boxes 5 for transporting the heat-sensitive products to final customers 3. For transporting the cooling boxes 5 to the final customers 3, a transport vehicle 4 is used. Each cooling box 5 is assigned a respective cooling container 6. A required cooling energy is determined for each of the cooling boxes 5. For each cooling box 5 an amount of the snow that is filled into the respective cooling container 6 is determined according to the determined required cooling energy. The snow machine 8 comprises a control unit 9 that has access to data relating to a mass of the heat-sensitive products allocated to a respective cooling box 5, a temperature requirement of the heat-sensitive products allocated to the respective cooling box 5, a temperature of the environment, a measure for the thermal insulation of the respective cooling box 5, a volume of the respective cooling box 5, a schedule for a delivery tour of the transport vehicle 4 by means of which the respective cooling box 5 is supposed to be transported.

According to the described method, in particular heat-sensitive food products can be distributed to final customers in cooling boxes that are cooled by a snow of a coolant such as carbon dioxide. Thereby, the required amount of carbon dioxide is determined accurately so that carbon dioxide and energy can be saved.

### List of reference numerals

- 1: coolant manufacturer site
- 2: distribution center
- 3: final customer
- 4: transport vehicle
- 5: cooling box
- 6: cooling container
- 7: coolant storage
- 8: snow apparatus
- 9: control unit

## Claims

1. Method for distributing heat-sensitive products to at least one final customer (3) comprising at least the following steps:
a) at a distribution center (2) providing a coolant in a liquid state,
b) allocating each of the heat-sensitive products to a respective cooling box (5) for transporting the heat-sensitive products to the at least one final customer (3),
c) determining a required cooling energy for each of the cooling boxes (5),
d) at the distribution center (2) transforming the liquid coolant into a snow and, for each of the cooling boxes (5), filling the snow into at least one respective cooling container (6), wherein for each cooling box (5) an amount of the snow that is filled into the respective cooling container (6) is chosen according to the determination in step c).

2. Method according to claim 1, wherein in step c) the required cooling energy is determined at least depending on an estimated duration over which a temperature within the respective cooling box (5) is to be maintained within a certain predetermined temperature range.

3. Method according to one of the previous claims, wherein in step c) the required cooling energy is determined at least depending on an initial temperature to which the cooling box (5) is to be cooled initially.

4. Method according to one of the previous claims, wherein a temperature in at least one of the cooling boxes (5) is to be maintained in a first temperature range of -25 °C and -20 °C.

5. Method according to one of the previous claims, wherein a temperature in at least one of the cooling boxes (5) is to be maintained in a second temperature range of -1 °C and +4 °C.

6. Method according to one of the previous claims, wherein a temperature in at least one of the cooling boxes (5) is to be maintained in a third temperature range of +4 °C and +8 °C.

7. Method according to one of the previous claims, wherein in step d) the snow is compressed to a block.

8. Method according to one of the previous claims, wherein in step d) a pressure exerted onto the snow to obtain the block is chosen at least depending on an estimated duration over which a temperature within the respective cooling box (5) is to be maintained within a certain predetermined temperature range.

9. Method according to one of the previous claims, wherein in step d), for reducing the cooling power of the coolant, a means for thermal insulation is placed between the coolant within the cooling container (6) and the remaining interior of the cooling box (5).

10. Method according to claim 9, wherein the means for thermal insulation is chosen at least depending on an estimated duration over which a temperature within the respective cooling box (5) is to be maintained within certain predetermined temperature range.

11. Method according to one of the previous claims, wherein each of the cooling boxes (5) has an internal volume in the range of 1 1 to 5000 1 [liters].

12. Method according to one of the previous claims, wherein in step c) the determining of the required cooling energy is performed using a control unit that has access to at least one of the following data:
- a mass of the heat-sensitive products allocated to a respective cooling box (5);
- a temperature requirement of the heat-sensitive products allocated to the respective cooling box (5);
- a current (ambient) temperature of the environment;
- a measure for the thermal insulation and/or for the thermal insulation surface area of the respective cooling box (5);
- a volume of the respective cooling box (5);
- a schedule for a delivery tour of a transport vehicle (4) by means of which the respective cooling box (5) is to be transported;
- a measure for a thermal contact between the respective cooling box (5) and other cooled or uncooled boxes in its proximity.
